Europäisches Patentamt

European Patent Office

Office européen des brevets

(19)

(11) Veröffentlichungsnummer: **0 316 451**
**A1**

(12) **EUROPÄISCHE PATENTANMELDUNG**

Veröffentlicht nach Art. 158 Abs. 3 EPÜ

(21) Anmeldenummer: 88903468.2

(22) Anmeldetag: 03.03.88

Daten der zugrundeliegenden internationalen Anmeldung:

(86) Internationale Anmeldenummer:
PCT/SU88/00050

(87) Internationale Veröffentlichungsnummer:
WO88/06950 (22.09.88 88/21)

(51) Int. Cl.³: **B 24 B 7/16**
**B 24 B 37/04**

(30) Priorität: 10.03.87 SU 4201398

(43) Veröffentlichungstag der Anmeldung:
24.05.89 Patentblatt 89/21

(84) Benannte Vertragsstaaten:
DE FR GB IT SE

(71) Anmelder: GRUZINSKY POLITEKHNICHESKY INSTITUT IMENI V.I. LENINA
ul. Lenina, 77
Tbilisi, 380075(SU)

(72) Erfinder: LOLADZE, Teimuraz Nikolaevich
ul. Lenina, 75-33
Tbilisi, 380075(SU)

(72) Erfinder: BATIASHVILI, Boris Iosifovich
pr. Vazha-Pshavela, 77-134
Tbilisi, 380086(SU)

(72) Erfinder: BUTSKHRIKIDZE, David Semenovich
pr. Mira, 2-24
Tbilisi, 380075(SU)

(72) Erfinder: MAMULASHVILI, Gennady Levanovich
ul. Oktyabrskaya, 263-35
Tbilisi, 380080(SU)

(74) Vertreter: Finck, Dieter et al,
Patentanwälte v. Füner, Ebbinghaus, Finck Mariahilfplatz 2 & 3
D-8000 München 90(DE)

(54) VORRICHTUNG FÜR SCHLEIFBEARBEITUNG.

(57) Die Vorrichtung zur Schleifbearbeitung enthält eine Ringstütze (1) und eine kinematisch mit einem Antrieb verbundene Planscheibe (5), die auf einem Axiallager (2) in einem Radiallager (8) drehbar aufliegt. Gemäß der Erfindung weist die Planscheibe (5) eine koaxiale Buchse (7) auf, die in dem Radiallager (8) gelagert ist, während die Planscheibe (5) und die Ringstütze (1) mittels einer Achse (9) miteinander federnd verbunden sind, welche Achse (9) durch die Buchse (7) hindurchgeht und in der Vorspannungsrichtung des Axiallagers (2) abgefedert ist. Die Planscheibe (5) ist mit der Achse (9) mittels eines zusätzlichen Axiallagers (12) mit der Möglichkeit der relativen Umdrehung verbunden und weist auf der zylindrischen Außenfläche ein angetriebenes Glied (16) des Antriebs auf, wobei eine durch die Breitenmitte des angetriebenen Gliedes (16) verlaufende Ebene (17) in einer Ebene (18) liegt, die im wesentlichen durch die Breitenmitte des Radiallagers (8) verläuft.

FIG.1

EP 0 316 451 A1

VORRICHTUNG ZUR SCHLEIFBEARBEITUNG

## Gebiet der Technik

Die vorliegende Erfindung bezieht sich auf den Maschinenbau und betrifft insbesondere Vorrichtungen zur Schleifbearbeitung.

## Zugrundeliegender Stand der Technik

Es ist eine Werkzeugmaschine zur Schleifbearbeitung (US, A, 2963830)bekannt, die ein Bett, eine an einer Planscheibe angebrachte Schleifscheibe enthält, wobei die Planscheibe ihrerseits an einer Antriebswelle montiert ist. Die Antriebswelle ist in einem am Bett befestigten Gehäuse mittels Radial-Schräglager gelagert. Die Schleifscheibe wird von einem Antrieb über die Antriebswelle und die Planscheibe rotierend angetrieben. Auf dem Bett ist ein Werkstückspindelstock angebracht, der Anpreßkräfte zum Andrükken der Werkstücke an die Stirnfläche der Schleifscheibe erzeugt.

Diese Anpreßkräfte, die senkrecht auf die Stirnfläche der Schleifscheibe gerichtet sind, erzeugen ein Moment in bezug auf die Lagerungen und rufen die Verformung der Antriebswelle, der Planscheibe und der Schleifscheibe hervor, weshalb eine hohe Genauigkeit der geometrischen Form der Werkzeugarbeitsfläche und folglich eine hohe Bearbeitungsgenauigkeit nicht erzielbar sind. Zum anderen ist der Einbau der Antriebswelle in den Radial-Schrägglagern wegen ihrer begrenzten Genauigkeit und Vorhandensein von Lüften in diesen die Ursache von Schleifscheibenschwingungen , die ebenfalls die Bearbeitungsgenauigkeit herabsetzen.

Es ist weiterhin eine Vorrichtung zum Schleifen von Werkstücken (GB, A, 2124114), bekannt, die ein Bett mit einer Ringstütze enthält, auf der mittels eines Axiallagers eine Planscheibe zum Einspannen von Werkstücken montiert ist, an der eine Antriebswelle koaxial starr befestigt ist, welche in einem in der Ringstütze des Bettes montierten Radiallager gelagert ist. Die Planscheibe erhält die Drehbewegung von einem Antrieb über ein Zahnradgetriebe und die Antriebswelle. Das angetriebene Zahnrad der Antriebswelle ist ihrem unteren Ende starr befestigt, während auf seine obere Stirnseite die Kräfte der am Umfang des Zahnrades

- 2 -

gleichmäßig verteilten Kraftzylinder über ihre Kolbenstangen übertragen werden, so daß eine Vorspannung im Axiallager sichergestellt wird.

Bei der in Betracht stehenden Werkzeugmaschine entstehen im Eingriffsbereich der Zahnräder Radial- und Axialkräfte, die ein Kippmoment auftreten lassen, das im Axialschnitt der Antriebswelle wirkt und unter dessen Wirkung sich die Antriebswelle verformt und die Planscheibe vom Axiallager anzuheben strebt, wodurch die gleichmäßige Verteilung der Vorspannkraft im Axiallager gestört und dessen ungleichmäßiger Verschleiß hervorgerufen wird. Das hat eine gestörte Drehungszügigkeit und den Auftritt von Schwingungen zur Folge, was mit der Zeit zur Verminderung der Bearbeitungsgenauigkeit führt. Außerdem entstehen selbst bei einer geringsten Ungleichheit der von den Kraftzylindern hervorzubringenden Kräfte zusätzliche Momente, die in verschiedenen Axialschnitten der Antriebswelle wirken und somit das auf die Planscheibe einwirkende Kippmoment und folglich die negativen Erscheinungen desselben verstärken, weshalb es unmöglich wird, die Bearbeitung von Werkstücken mit erhöhten Geschwindigkeiten durchzuführen.

Frei von größerem Teil der erwähnten Nachteile ist eine Vorrichtung zur Schleifbearbeitung von ebenen Flächen (SU, A, 1104762), die ein Bett aufweist, auf dem ein Werkstückspindelstock montiert und eine Ringstütze befestigt ist. Auf der Ringstütze ist mittels eines Axiallagers eine Planscheibe gelagert, die von einer starr befestigten koaxialen Antriebswelle drehbar angetrieben wird, wobei das obere Ende der Antriebswelle in einem in der Ringstütze angeordneten Wälzlager gelagert ist und das untere Ende der Antriebswelle mittels einer Kupplung mit der Walze des angetriebenen Gliedes eines Antriebs verbunden ist, die in Wälzlagern gelagert ist, die sich in einem am Bett angebrachten Gehäuse befinden.

Die in Betracht stehende Vorrichtung enthält auch eine einstellbare Andruckeinrichtung zum Andrücken der Planscheibe an die Ringstütze, welche Andruckeinrichtung in Form eines pneumatischen Diaphragmas ausgebildet ist, des-

- 3 -

sen Körper am Bett befestigt ist.

Durch Beseitigung der Einwirkung von im Antrieb entstehenden Radialkräften auf die Antriebswelle sowie durch die koaxiale Anordnung des pneumatischen Diaphragmas an der Antriebswelle erlaubt es die bekannte Vorrichtung, die Belastung auf das Axiallager gleichmäßiger zu verteilen, wodurch die Kippmomente in den Axialebenen verschwinden. Da jedoch die Planscheibe an die Ringstütze über die Axiallagerschalen mit einer bestimmten Kraft angedrückt wird, entsteht bei erheblicher Länge der Antriebswelle ein erhöhter Radialschlag ihres unteren Endes, wodurch beim Umlauf auf die Schalen eine ungleichmäßige Belastung wirken wird, die einen ungleichmäßigen Verschleiß sowohl bei den Axiallagerschalen, als auch bei den Auflageflächen der Planscheibe hervorruft und letzten Endes zur Verminderung der Bearbeitungsgenauigkeit führt. Außerdem ist als Nachteil hervorzuheben, daß der Aufbau der Werkzeugmaschine ziemlich kompliziert ist und das pneumatische Diaphragma und die Einheit des angetriebenen Gliedes, welche am Bett befestigt und darin angeordnet sind, erhebliche axiale Abmessungen haben, wodurch die Steifigkeit der Konstruktion nachläßt und der Metallaufwand der Vorrichtung zur Schleifbearbeitung ansteigt.

Offenbarung der Erfindung

Der Erfindung liegt die Aufgabe zugrunde, eine derartige Vorrichtung zur Schleifbearbeitung zu schaffen, deren bauliche Gestaltung durch Erhöhung der Steifigkeit dieser Vorrichtung und Sicherstellung des gleichmäßigen Andrucks der Planscheibe an die Ringstütze zwecks gleichmäßigen Verschleißes der Axiallagerschalen und der Auflageflächen der Planscheibe eine hohe Bearbeitungsgenauigkeit ermöglicht und unter Verminderung axialer Abmessungen und des Metallaufwandes wesentlich vereinfacht wird.

Diese Aufgabe wird dadurch gelöst, daß bei einer Vorrichtung zur Schleifbearbeitung enthaltend eine Ringstütze, auf der ein Axiallager angeordnet ist, und eine mit einem Antrieb kinematisch verbundene Planscheibe mit einem Schleifwerkzeug, die auf dem Axiallager in einem innerhalb der Ringstütze eingebauten Radiallager drehbar aufliegt erfindungsgemäß die Planscheibe eine koaxiale Buchse aufweist, die auf ihrer inneren Stirnfläche angebracht und in dem Radiallager angeordnet ist, wobei die Planscheibe und die Ringstütze mittels einer Achse mit einem Bund an dem einen Ende und einem Gewinde mit einer Mutter an dem anderen Ende miteinander federnd verbunden sind, welche Achse durch die Buchse und eine Zentralöffnung der Ringstütze hindurchgeht und in der Vorspannungsrichtung des Axiallagers abgefedert ist, wobei die Planscheibe mit der Achse mittels eines zusätzlichen Axiallagers mit der Möglichkeit des relativen Umdrehens verbunden ist und an der zylindrischen Außenfläche ein angetriebenes Glied des Antriebs aufweist, wobei eine durch die Breitenmitte des angetriebenen Gliedes des Antriebs verlaufende Ebene in einer Ebene liegt, die im wesentlichen durch die Breitenmitte des Radiallagers verläuft.

Die Montage der Planscheibe im Radiallager mittels der koaxialen Buchse und die Anordnung des angetriebenen Gliedes des Antriebs an der zylindrischen Außenfläche der Planscheibe gibt die Möglichkeit, die axialen Abmessungen der Vorrichtung wesentlich zu verringern.

Durch die Anordnung des angetriebenen Gliedes des Antriebs in bezug auf das Radiallager, bei welcher die durch ihre Breitenmitten verlaufenden Ebenen im wesentlichen zusammenfallen, werden die Kippmomente vermieden, welche aufgrund der vom Antrieb hervorzubringenden Radialkräfte auftreten könnten, wodurch eine gleichmäßige Belastung auf das Axiallager erreicht wird.

Die federnde Bindung der Planscheibe mit der Ringstütze gleicht die Kippmomente und den Verschleiß des Axiallagers aus, welche während des Betriebs der Vorrichtung auftreten.

Das zusätzliche Axiallager kann zweckmäßigerweise in einer in der äußeren Stirnfläche der Planscheibe eingearbeiteten axialen Ausbohrung zwischen dem Bund und dem Grund der axialen Ausbohrung angeordnet werden.

Eine solche Anordnung ermöglicht es, die Arbeitsfläche der Schleifscheibe an die äußere Stirnfläche der Planscheibe näher zu bringen und somit die Größe des Kippmomentes, das durch die während des Bearbeitungsprozesses auftretenden Radialkräfte erzeugt wird, zu verringern.

Die Achse kann zweckmäßigerweise mittels eines an der Achse zwischen der Mutter und der Ringstütze angebrachten ringförmigen elastischen Elementes in der Vorspannungsrichtung des Axiallagers abgefedert werden, wobei das zusätzliche Axiallager zweckmäßigerweise auf dem Grund der axialen Ausbohrung koaxial zur Planscheibe angeordnet wird.

Durch eine solche Anordnung wird die Zentrierung der Achse in bezug auf die Planscheibe mittels des zusätzlichen Axiallagers ermöglicht.

In einer bevorzugten Ausführungsform der Erfindung ist die Achse in der Vorspannungsrichtung des Axiallagers mit Hilfe eines ringförmigen elastischen Elementes abgefedert, welches zwischen dem zusätzlichen Axiallager und dem Grund der axialen Ausbohrung eingebaut ist.

Solch eine bauliche Gestaltung läßt die axialen Abmessungen der Vorrichtung noch kleiner zu machen.

Die erfindungsgemäße Vorrichtung zur Schleifbearbeitung ermöglicht also eine ziemlich hohe Genauigkeit der Schleifbearbeitung und eine wesentliche Vereinfachung des Aufbaus bei gleichzeitiger Herabsetzung des Metallaufwandes.

## Kurze Beschreibung der Zeichnungen

Die erwähnten und weiteren Besonderheiten und Vorteile der vorliegenden Erfindung gehen aus der nachstehenden Beschreibung von konkreten Ausführungsbeispielen derselben mit Hinweisen auf die beiliegenden Zeichnungen deutlicher hervor. In den Zeichnungen zeigt

Fig. 1 schematische Darstellung der erfindungsgemäßen Vorrichtung zur Schleifbearbeitung in Längsschnitt;

Fig. 2 einen Längsschnitt durch die erfindungsgemäße Vorrichtung zur Schleifbearbeitung nach einer Ausführungsform, bei der das zusätzliche Axiallager in einer in der äußeren Stirnfläche der Planscheibe eingearbeiteten axialen Ausbohrung liegt, während das elastische Element in

- 6 -

Form einer Spiralfeder ausgebildet ist.

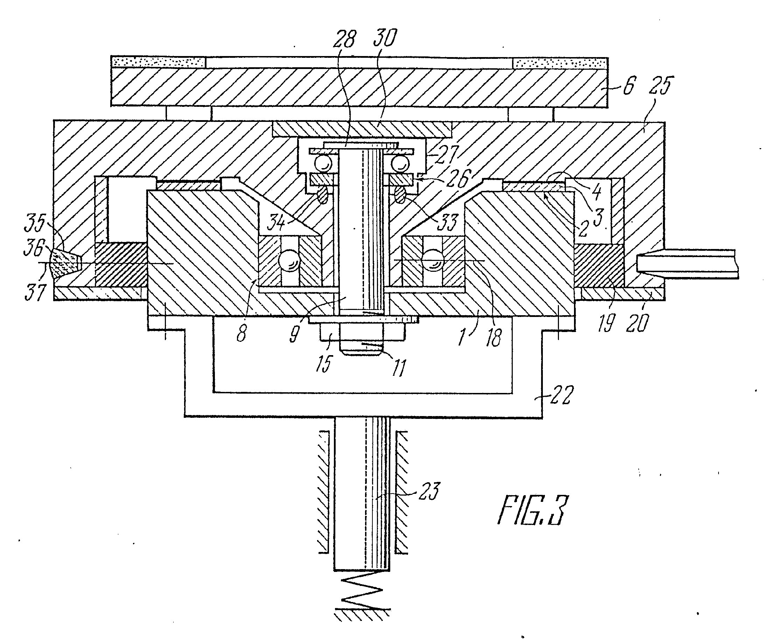

Fig. 3 einen Längsschnitt durch die erfindungsgemäße Vorrichtung zur Schleifbearbeitung nach einer weiteren Ausführungsform, bei der das ringförmige elastische Element zwischen dem zusätzlichen Axiallager und dem Grund der axialen Ausbohrung angeordnet ist.

## Bevorzugte Ausführungsvarianten der Erfindung

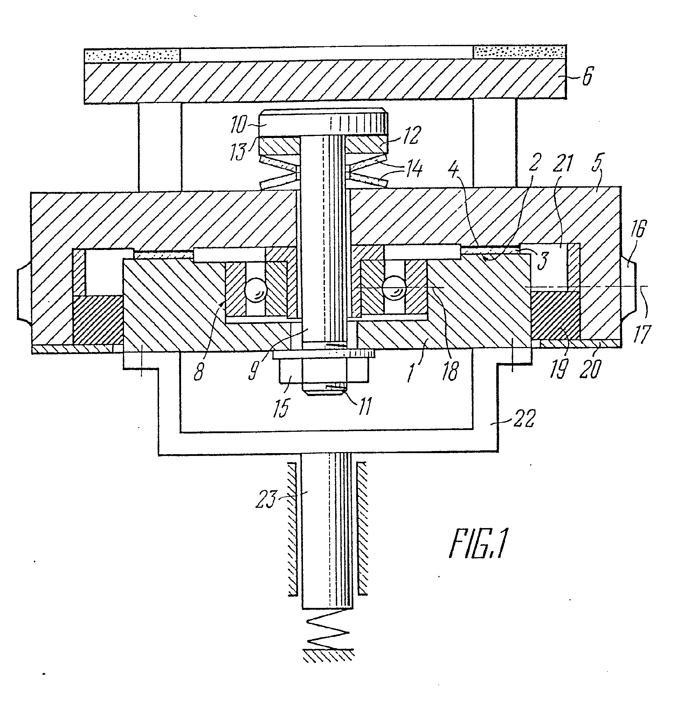

Die erfindungsgemäße Vorrichtung zur Schleifbearbeitung, die in Fig. 1 gezeigt ist, enthält eine Ringstütze 1, auf der ein Axialgleitlager 2 angeordnet ist, dessen Schalen 3 einen Gleitüberzug 4 aufweisen. Auf dem Axiallager 2 liegt eine Planscheibe 5 mit einem Schleifwerkzeug 6 auf. An der inneren Stirnfläche der Planscheibe 5 ist eine koaxiale Buchse 7 starr befestigt, welche in einem Radiallager 8 drehbar gelagert ist. Das Radiallager 8 ist in der Ringstütze 1 eingebaut. Durch die koaxiale Buchse 7 geht eine Achse 9 hindurch, an deren oberem (gemäß der Zeichnung) Ende ein Bund 10 und an deren unterem Ende ein Gewinde 11 vorgesehen sind. Der Bund 10 stützt sich auf ein zusätzliches Axialgleitlager 12 mit einem Gleitüberzug 13, das sich seinerseits über Tellerfedern 14 auf die äußere Stirnfläche der Planscheibe 5 stützt. Auf das Gewinde 11 der Achse 9 ist eine Andruckmutter 15 aufgeschraubt, die die Vorspannkraft des Axiallagers 2 erzeugt. An der zylindrischen Fläche der Planscheibe 5 ist ein Zahnradkranz 16 eines Antriebs angebracht, wobei der Zahnradkranz 16 derart angeordnet ist, daß eine durch seine Breitenmitte verlaufende 17 in einer Ebene 18 liegt, die im wesentlichen durch die Breitenmitte des Radiallagers 8 verläuft.

Zwischen der zylindrischen Außenfläche der Ringstütze 1 und der zylindrischen Innenfläche der Planscheibe 5 ist eine Dichtung 19 vorgesehen, die mit einem an der Planscheibe 5 befestigten Deckel 20 verdeckt ist. Die Dichtung 19 verhindert, daß der Schmierstoff für die Schalen 3 des Axiallagers 2 aus dem Innenraum 21 der Planscheibe 5 ausfließt. Wenn die erfindungsgemäße Vorrichtung in einer (gegenüber der in der Zeichnung dargestellten Lage) um 180° gedrehten Lage betrieben wird, darf man die Dichtung 19 nicht einsetzen.

Die Ringstütze 1 ist auf dem Flansch 22 einer Pinole 23 starr befestigt, die in einem (in der Zeichnung nicht gezeigten) Gehäuse achsverschiebbar untergebracht ist.

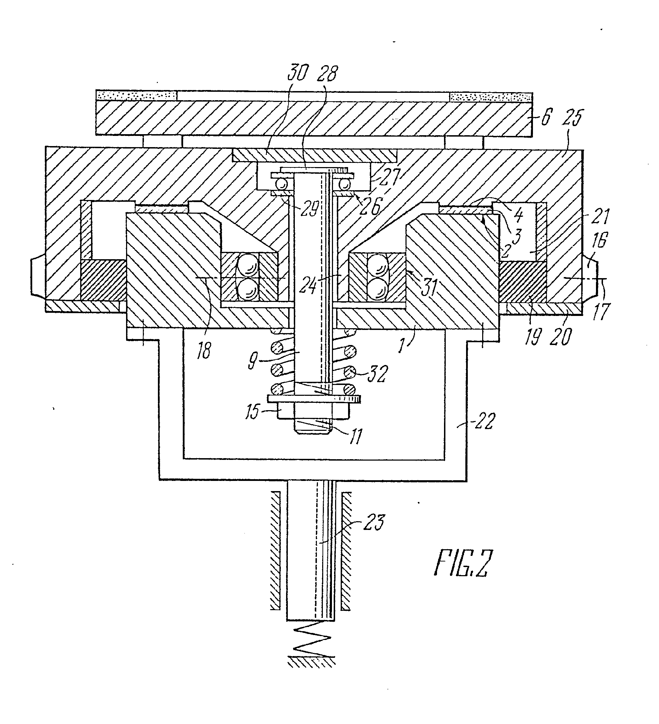

Die in Fig. 2 gezeigte Ausführungsform der erfindungsgemäßen Vorrichtung zur Schleifbearbeitung ist analog der vorangegangenen ausgeführt, doch ist die koaxiale Buchse 24 mit der Planscheibe 25 einstückig ausgebildet, das zusätzliche Axiallager 26 als Wälzlager ausgeführt, in einer axialen Ausbohrung 27 zwischen dem Bund 28 und dem Grund der axialen Ausbohrung 27 untergebracht und in eine Zentrierausdrehung 29 eingesetzt. Die axiale Ausbohrung 27 ist mit einem Deckel 30 verdeckt. Die koaxiale Buchse 24 der Planscheibe 25 ist in einem in der Ringstütze 1 angeordneten zweireihigen Radialpendelkugellager 31 gelagert. Die Achse 9 ist mittels eines ringförmigen elastischen Elementes abgefedert, das in Form einer zylindrischen Druckfeder 32 ausgebildet ist, welche sich an der Achse 9 zwischen der Andruckmutter 15 und der Ringstütze 1 befindet.

Bei einer weiteren Ausführungsform der erfindungsgemäßen Vorrichtung zur Schleifbearbeitung ist zum Unterschied von den obenerwähnten Ausführungsformen das ringförmige elastische Element in Gestalt eines Gummiringes 33 ausgebildet, der zwischen dem zusätzlichen Axiallager 26 und dem Grund der axialen Ausbohrung 27 der Planscheibe 5 in einer Ringnut 34 untergebracht ist, welche im Grund der axialen Ausbohrung 27 koaxial zu der Bohrung der Buchse 24 eingearbeitet ist. An der zylindrischen Außenfläche der Planscheibe 5 ist eine keilförmige Rille 35 vorgesehen, die für die Abtriebsscheibe des Riemens 36 eines Keilriemenantriebes dient und derart angeordnet ist, daß eine durch ihre Breitenmitte verlaufende Ebene 37 in der Ebene 18 liegt, welche im wesentlichen durch die Breitenmitte des Radiallagers 8 verläuft.

Die Funktionsweise der erfindungsgemäßen Vorrichtung zur Schleifbearbeitung ist die folgende.

Vor Beginn der Bearbeitung zieht man die Andruckmutter 15 (Fig. 1), die sich gegen die Ringstütze 1 stemmt,

- 8 -

am Gewinde 11 der Achse 9 an. Dabei verschiebt sich die Achse 9 in Achsrichtung und drückt mit ihrem Bund 10 gegen das zusätzliche Axiallager 12, das über die Tellerfeder 14 auf die Planscheibe 5 einwirkt, wodurch im Axiallager 2 eine Vorspannung erzeugt wird. Man stellt die Vorspannkraft derart ein, daß alle im Axiallager 2 vorhandenen Lüfte sowie die Lüfte, die beim Verschleiß des Axiallagers 2 auftreten, beseitigt werden. Die Planscheibe 5 dreht man dabei langsam um, um die Beseitigung der Lüfte an einem (nicht gezeigten) Anzeiger zu überprüfen.

Nachdem im Axiallager 2 eine Vorspannung hergestellt worden ist, spannt man auf der Planscheibe 5 das Schleifwerkzeug 6 oder eine Kassette mit Werkstücken (in der Zeichnung nicht gezeigt) ein.

Die Planscheibe 5 wird mittels des (nicht abgebildeten) Antriebs über den Zahnradkranz 16 in Drehung versetzt. Die Radialkräfte, die vom laufenden Antrieb herrühren, sowie diejenigen, die am Schleifwerkzeug 6 während der Bearbeitung der Werkstücke auftreten, werden vom Radiallager 8 aufgenommen. Die Radialkräfte, die im Eingriffsbereich des Antriebs auftreten und auf das angetriebene Glied einwirken, werden dabei von den im Radiallager 8 auftretenden Reaktionskräften ausgeglichen und erzeugen keine schädlichen Kippmomente, die die Planscheibe 5 vom Axiallager 2 anheben könnten, weil die Resultierenden der einen und der anderen Kräfte in der gleichen Ebene liegen.

Der Vorschub der erfindungsgemäßen Vorrichtung zur Schleifbearbeitung erfolgt während des Bearbeitungsvorganges durch die axiale Bewegung der Pinole 23.

Die in Fig. 2 dargestellte Ausführungsform der erfindungsgemäßen Vorrichtung zur Schleifbearbeitung arbeitet in ähnlicher Weise.

Dabei soll hervorgehoben werden, daß bei Auftritt von Schwingungen der Achse 9 wegen eventueller Anfertigungsfehler der Achse 9 und der Planscheibe 5 die Möglichkeit der Zusammenwirkung der Achse 9 und der Buchse 24 bzw. Ringstütze 1 durch Zentrieren der Achse 9 in der Planscheibe 25 mit Hilfe des in der Zentrierausdrehung 29 der axialen

- 9 -

Ausbohrung 27 angeordneten zusätzlichen Axiallagers 26 sowie durch Vorhandensein der mittels der zylindrischen Feder 32 herzustellenden Bindung zwischen der am Gewinde 11 der Achse 9 aufgeschraubten Andruckmitter 15 und der Ringstütze 1 ausgeschlossen wird, was sonst zu ungleichmäßigen Belastungen auf das Axiallager führen könnte. Außer- dem wird die eventuelle nichtrechtwinklige Anordnung der Auflagefläche der Planscheibe 5 in bezug auf die zylindrischen Außenfläche der Buchse 24 durch das zweireihige Radialpendelkugellager 31 ausgeglichen.

Die nach der weiteren Ausführungsform entwickelte erfindungsgemäße Vorrichtung zur Schleifbearbeitung arbeitet analog den obenbeschriebenen. In diesem Fall werden eventuelle Schwingungen der Achse 9 in Radialrichtung vom Gummiring 33 aufgenommen.

Gewerbliche Anwendbarkeit

Die vorliegende Erfindung kann mit dem größten Nutz- effekt beim Präzisionsschleifen, Polieren und Läppen von ebenen Werkstückflächen insbesondere von Schwingquarz- resonatoren, Substraten für integrierte Schaltungen, nicht nachschleifbaren Platten aus Hartlegierungen, Mineralke- ramik und anderen Verbundwerkstoffen, Juwelierwaren u.a. verwendet werden.

Die erfindungsgemäße Vorrichtung zur Schleifbearbei- tung eignet sich ebenso als eignet sich ebenso als Präzisionsspindel oder- tisch zur Durchführung anderer Schnitt- vorgänge mit Axialbelastungen.

## PATENTANSPRÜCHE

1. Vorrichtung zur Schleifbearbeitung, enthaltend eine Ringstütze (1), auf der ein Axiallager (2) angeordnet ist, und eine mit einem Antrieb kinematisch verbundene Planscheibe (5, 25) mit einem Schleifwerkzeug (6), die auf dem Axiallager (2) in einem innerhalb der Ringstütze (1) eingebauten Radiallager (8, 31) drehbar aufliegt, dadurch g e k e n n z e i c h n e t, daß die Planscheibe (5, 25) eine koaxiale Buchse (7, 24) aufweist, die auf ihrer inneren Stirnfläche angebracht und im Radiallager (8, 31) angeordnet ist, wobei die Planscheibe (5, 25) und die Ringstütze (1) mittels einer Achse (9) mit einem Bund (10, 28) an dem einen Ende und einem Gewinde (11) mit einer Mutter (15) an dem anderen Ende miteinander federnd verbunden sind, welche Achse (9) durch die Buchse (7, 24) und eine Zentralöffnung der Ringstütze (1) hindurchgeht und in der Vorspannungsrichtung des Axiallagers (2) abgefedert ist, wobei die Planscheibe (5, 25) mit der Achse (9) mittels eines zusätzlichen Axiallagers (12, 26) mit der Möglichkeit des relativen Umdrehens verbunden ist und an der zylindrischen Außenfläche ein angetriebenes Glied (16, 36) des Antriebs aufweist, wobei eine durch die Breitenmitte des angetriebenen Gliedes (16, 36) des Antriebs verlaufende Ebene (17, 37) in einer Ebene (18) liegt, die im wesentlichen durch die Breitenmitte des Radiallagers (8) verläuft.

2. Vorrichtung zur Schleifbearbeitung nach Anspruch 1, dadurch g e k e n n z e i c h n e t, daß das zusätzliche Axiallager (26) in einer in der äußeren Stirnfläche der Planscheibe (25) eingearbeiteten axialen Ausbohrung (27) zwischen dem Bund (28) der Achse (9) und dem Grund der axialen Ausbohrung (27) angeordnet ist.

3. Vorrichtung zur Schleifbearbeitung nach Anspruch 2, dadurch g e k e n n z e i c h n e t, daß die Achse (9) mittels eines an der Achse (9) zwischen der Mutter (15) und der Ringstütze (1) angebrachten ringförmigen elastischen Elementes (32) in der Vorspannungsrichtung des Axiallagers (2) abgefedert ist, wobei das zusätzliche Axiallager (26) auf dem Grund der axialen Ausbohrung (27) koaxial zu der Planscheibe (25) angeordnet ist.

4. Vorrichtung zur Schleifbearbeitung nach Anspruch 2, dadurch g e k e n n z e i c h n e t, daß die Achse (9) mittels eines zwischen dem zusätzlichen Axiallager (26) und dem Grund der axialen Ausbohrung (27) koaxial zu der Planscheibe (25) angeordneten ringförmigen elastischen Elementes (33) in der Vorspannungsrichtung des Axiallagers (2) abgefedert ist.

FIG.1

0316451

FIG.2

FIG.3

# INTERNATIONAL SEARCH REPORT

International Application No PCT/SU 88/00050

**I. CLASSIFICATION OF SUBJECT MATTER** (If several classification symbols apply, indicate all) *

According to International Patent Classification (IPC) or to both National Classification and IPC

IPC⁴    B24B 7/16,37/04

**II. FIELDS SEARCHED**

| Minimum Documentation Searched 7 | |
|---|---|
| Classification System | Classification Symbols |
| IPC⁴ | B24B 7/16,7/04,37/04,41/047,41/04 |

Documentation Searched other than Minimum Documentation
to the Extent that such Documents are Included in the Fields Searched 8

**III. DOCUMENTS CONSIDERED TO BE RELEVANT 9**

| Category * | Citation of Document, 11 with indication, where appropriate, of the relevant passages 12 | Relevant to Claim No. 13 |
|---|---|---|
| A | SU, A1, 471186 (Mezhzavodskoe proektno-konstruktorskoe tekhnologicheskoe bjuro Kievskogo opytno-experimentalnogo zavoda stekloizdely) 22 August 1975 (22.08.75) see column 2,lines 20,30 | 1-4 |
| A | SU, A1, 965740 (Spetsialnoe konstruktorsko-tekhnologicheskoe bjuro kompressornogo i kholodilnogo mashinostroenia) 18 October 1982 (18.10.82) see column 2,lines 13-23,,column 3, lines 1-21 | 1-4 |
| A | US, A, 3968598 (Canon Kabushiki Kaisha et al.) 13 July 1976 (13.07.76) see column 6,lines 58-68,,column 7, lines 1-51 | 1-4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 12 May 1988 (12.05.88) | 25 May 1988 (25.05.88) |
| International Searching Authority | Signature of Authorized Officer |
| ISA/SU | |

Form PCT/ISA/210 (second sheet) (January 1985)